# EUROPÄISCHE PATENTANMELDUNG

(11) **EP 1 306 816 A2**
(43) Veröffentlichungstag der Anmeldung: **02.05.2003**
(21) Anmeldenummer: 02023205.4
(22) Anmeldetag: 16.10.2002
(51) Int. Cl.: G07C 9/00

(54) **Zugriffkontroll-Befehlsgerät zum Fronttafeleinbau**

(30) Priorität: 24.10.2001 DE 10152346
(71) Anmelder: SIEMENS AKTIENGESELLSCHAFT, 80333 München (DE)
(72) Erfinder: Berger, Thomas, 92256 Hahnbach (DE); Kling, Andre, 95512 Neudrossenfeld (DE); Schumacher, Hartmut, 92263 Ebermannsdorf (DE)

(57) **Zusammenfassung**

Aufgabengemäß soll ein Zugriffskontroll-Befehlsgerät (1) geschaffen werden, das sicher, universell einsetzbar, flexibel bei Änderungen und anwenderfreundlich ist. Dies wird im wesentlichen durch Integration eines Sensors (8) zur Erfassung von Personenidentifikationsmerkmalen im Betätigungselement (5) und eine angepasst ausgeführt Elektronik (9) im Zugriffskontroll-Befehlsgerät (1) erreicht, welche direkt in die sichere Maschinensteuerung eingebunden ist.

## Beschreibung

Die Erfindung betrifft ein Zugriffkontroll-Befehlsgerät zum Einbau in eine Öffnung einer Fronttafel.

Im industriellen Bereich werden viele Vorrichtungen, Maschinen, Automaten und ganze Anlagen betrieben. Diese Einrichtungen werden mehr oder weniger von Menschenhand ein- bzw. ausgeschaltet, bedient, eingerichtet oder gewartet. Die hierfür erforderliche Schnittstelle "Mensch-Maschine" ist als Bedientableau aufgebaut, in dem die bekannten Befehls- und Meldegeräte in unterschiedlichsten Ausführungen eingebaut werden. Ein besonders sensibler Bereich ist hier die unter Sicherheitsgesichtspunkten vergebene Autorisierung einer Person zu speziellen Handlungen, wie z.B. die Berechtigung für das Einund Ausschalten einer Zelle der Maschine, der gesamten Maschine oder einer ganzen Anlage, für den Einrichtbetrieb, zum Betrieb mit/ohne Schutz, Betrieb online/offline, manueller Eingriff, Automatik/Hand, Inbetriebnahme/Hoch- oder Herunterfahren gefährlicher Prozesse oder ähnlichem oder dem Umschalten der Herstellprozesse zur Produktion einer anderen Variante auf einer Maschine, usw..

Die zu diesen Zwecken bekannten Befehlsgeräte entsprechen immer schlechter den ständig steigenden Sicherheitsanforderungen, sie sind teuer und umständlich und müssen meist durch den Zusammenbau mehrerer Module/Komponenten, aufgebaut werden. Änderungen in diesem sicherheits-relevanten Bereich sind meist aufwendig und sowohl kosten- wie auch zeitintensiv.

Bisher erfolgt die Zugriffsberechtigung für sicherheitsrelevante Handlungen, wie oben beschrieben, mittels Schlössern und ganzen Schließsystemen. Es kommen aber auch Zahlenschlösser, Magnetkarten oder entsprechendes zur Anwendung. Bei den am meisten verbreiteten Schlössern werden die Maschinen mit geeigneten Schlüsselschaltern versehen, bei denen die Schlüsseldrehung sicherheitsgerichtete elektrische Kontakte betätigt, die wiederum in der vorgeschriebenen Weise auf die Steuerung der Anlage einwirken. Die jeweils berechtigten Personen erhalten den oder die zugehörigen Schlüssel. Für die Zahlenschlösser und Magnetkarten gilt entsprechendes.

Der Erfindung liegt die Aufgabe zugrunde, ein Zugriffskontroll-Befehlsgerät der oben genannten Art zu schaffen, das universell einsetzbar, flexibel bei Änderungen und anwenderfreundlich ist.

Darüber hinaus soll das Zugriffskontroll-Befehlsgerät den gestiegenen Sicherheitsanforderungen entsprechen, manipulationssicher, nicht fälschbar und nicht vergess- oder verlieroder verleihbar sein.

Die Aufgabe wird durch ein Zugriffskontroll-Befehlsgerät zum Einbau in eine Öffnung einer Fronttafel gelöst, die eine Bedienseite und eine dieser gegenüberliegende Rückseite aufweist, und folgende Merkmale umfasst:
a) Mit einem Betätigungselement, das zur Abstützung an dem die Öffnung umgebenden Fronttafelbereich einen Kragen aufweist,
b) das Betätigungselement weist einen Sensor zur Erfassung von Personen-Identifikationsmerkmalen auf,
c) mit einer gehäusegekapselten Elektronik, die elektrisch mit dem Sensor verbunden ist,
d) die Elektronik umfasst eine Verarbeitungseinheit, eine Speichereinheit, eine Programmeinheit sowie eine Vergleichs- und Auswerteeinheit,
e) mit der Elektronik sind elektrische Anschlüsse verbunden, die im montierten Zustand von der Rückseite der Fronttafel zugänglich sind und an denen nach vorausgegangener Aktivierung des Zugriffskontroll-Befehlsgeräts durch eine als betätigungsberechtigt identifizierte Person ein elektrisches Auslösesignal ansteht,
f) die Verarbeitungseinheit dient zur Verarbeitung der Daten, die vom Sensor aufgrund der erfassten Personenidentifikationsmerkmale generiert werden,
g) die Speichereinheit dient zur Abspeicherung der bearbeiteten Daten,
h) die Programmeinheit umfasst ein Programm zur Programmierung der Betätigungsberechtigung von Personen, wozu die Personenidentifikationsmerkmale dieser Personen erfasst werden und den Personenidentifikationsmerkmalen entsprechende Daten in dem Speicher abgespeichert werden und
i) die Vergleichs- und Auswerteeinheit dient zum Vergleich und zur Auswertung der mit dem Sensor erfassten Personenidentifikationsmerkmale von Personen, die das Zugriffskontroll-Befehlsgerät betätigen, mit abgespeicherten Personenidentifikationsmerkmalen, woraufhin ausschließlich nach Betätigung durch eine betätigungsberechtigte Personen ein elektrisches Auslösesignal an den Anschlüssen ansteht.

Mit diesem Zugriffskontroll-Befehlsgerät werden bisher bekannte Schlüsselschalter, Schließsysteme, Zahlenschlösser, Magnetkarten oder entsprechendes durch Anwendung einer geeigneten personengebundenen, nicht fälschbaren und nicht vergess- oder verlierbaren Identifikationsmethodik für die Zugriffskontrolle ersetzt.

Vorteilhafte Weiterbildungen der Erfindung sind den Unteransprüchen zu entnehmen.

Ein Ausführungsbeispiel der Erfindung wird im folgenden anhand einer Zeichnung näher erläutert. Es zeigen:
- FIG 1: eine erste Ausführungsform eines Zugriffskontroll-Befehlsgeräts in einer Fronttafel in einer Schnittdarstellung,
- FIG 2: eine Vorderansicht der Ausführungsform des Zugriffskontroll-Befehlsgeräts gemäß FIG 1,
- FIG 3: eine Schnittdarstellung einer zweiten Ausführungsform eines Zugriffskontroll-Befehlsgeräts,
- FIG 4: eine Vorderansicht des zweiten Zugriffskontroll-Befehlsgeräts gemäß FIG 3,
- FIG 5: eine dritte Ausführungsform eines Zugriffskontroll-Befehlsgeräts in Querschnittsdarstellung und
- FIG 6: eine Vorderansicht der dritten Ausführungsform des Zugriffskontroll-Befehlsgeräts gemäß FIG 5.

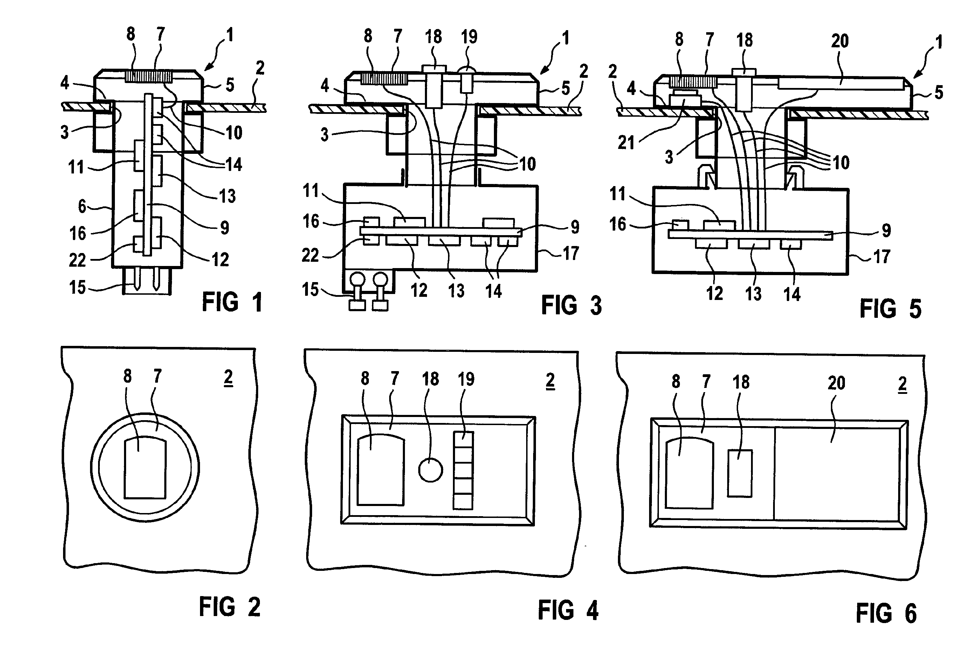

FIG 1 zeigt eine Querschnittsdarstellung einer ersten Ausführungsform eines Zugriffskontroll-Befehlsgeräts 1, das in eine Öffnung 3 einer Fronttafel 2 eingebaut ist. Dabei steht die "Fronttafel" als allgemeiner Begriff, der z.B. ein Bedientableau und eine Schalttafel umfasst. Dieses Zugriffskontroll-Befehlsgerät 1 weist einen Kragen 4 auf, mit dem ein an der Bedienseite der Fronttafel 2 vorstehendes Betätigungselement 5 sich an dem die Öffnung 3 umgebenden Fronttafelbereich abstützt. Dem Betätigungselement 5 schließt sich ein längliches, in die Rückseite der Fronttafel 2 ragendes und zu dieser senkrecht orientiertes Gehäuseteil 6 an. Das Betätigungselement 5 weist an seiner Frontseite eine Betätigungsfläche 7 mit einem integrierten Sensor 8 zur Erfassung von Personenidentifikationsmerkmalen auf. Der Sensor 8 kann ein biometrischer Sensor, z.B. ein Fingertippsensor sein. Im Gehäuseteil 6 befindet sich eine als Leiterplatte ausgebildete Elektronik 9, die über elektrische Datenleitungen 10 mit dem Sensor 8 verbunden ist. Die Elektronik 9 umfasst eine Verarbeitungseinheit 11, mit der die Vorverarbeitung der vom Sensor 8 erhaltenen Daten erfolgt. Weiterhin ist die Elektronik 9 mit einer Speichereinheit 12 zur Abspeicherung bzw. Ablage der für diesen Sensor 8 relevanten Daten versehen. Eine in der Elektronik 9 integrierte Programmeinheit 13 umfasst ein Programm zur Programmierung der Betätigungsberechtigung von Personen, wozu die Personenidentifikationsmerkmale dieser Personen von dem Sensor 8 erfasst werden und den Personenidentifikationsmerkmalen entsprechende Daten in dem Speicher 11 abgespeichert werden. Die Elektronik 9 ist außerdem mit einer Vergleichs- und Auswerteeinheit 14 ausgestattet, die zum Vergleich und zur Auswertung der mit dem Sensor 8 erfassten Personenidentifikationsmerkmale von Personen, die das Zugriffskontroll-Befehlsgerät 1 betätigen, mit abgespeicherten Personenidentifikationsmerkmalen dient. Daraufhin steht ausschließlich nach Betätigung durch betätigungsberechtigte Personen ein elektrisches Auslösesignal an Anschlüssen 15 an, die mit der Elektronik 9 auf der Rückseite der Fronttafel 2 verbunden sind. Wahlweise kann die Elektronik 9 auch mit einer Kommunikationsschnittstelle 16 zur Maschinensteuerung versehen sein. Dabei kann das elektrische Auslösesignal personenspezifische Berechtigungsmerkmale beinhalten. Neben einer Ankopplung über die Anschlüsse 15 an die Maschine mit konventioneller Verdrahtung erfolgt diese vorzugsweise an einen sicheren Bus, wobei die Anschlüsse 15 mit entsprechend geeigneten Kontaktspitzen zur abisolierfreien Kontaktierung versehen sein können. Optional kann das Zugriffskontroll-Befehlsgerät um eine intelligente Erkennungsmethodik für die eigene Verschmutzung erweitert werden. Hierzu wird in der Elektronik 9 ein Verschmutzungssensor 22 integriert, der regelmäßig die Güte z.B. der Fingerabdruckerkennung prüft, sich so lange wie möglich selbständig nachjustiert und bei zu starkem Abfall der Empfangsleistung z.B. eine entsprechende Warn- oder Fehlermeldung ausgibt.

FIG 2 zeigt eine Frontansicht der ersten Ausführungsform des Zugriffskontroll-Befehlsgeräts 1 gemäß FIG 1 mit der Betätigungsfläche 7 am Betätigungselement 5 und dem integrierten Sensor 8 zur Erfassung von Personenidentifikationsmerkmalen.

Das Zugriffskontroll-Befehlsgerät 1 gemäß FIG 1 zeichnet sich durch eine hohe Integration der Elektronik 9 aus, da bereits in dem engen Bereich seiner Durchführung durch die Fronttafel 2 der Sensor 8 mit der Elektronik 9 verbunden wird.

Die beiden Ausführungsformen von Zugriffskontroll-Befehlsgeräten 1 gemäß den FIG 3 bis 6 sind grundsätzlich gleich aufgebaut, wie das zuvor beschriebene Befehlsgerät 1 gemäß FIG 1, 2. Es wird an dieser Stelle daher nur auf spezifische Eigenheiten dieser beiden Ausführungsformen im folgenden eingegangen. Bei den beiden Ausführungsformen gemäß FIG 3 bis 6 wird ein Koppelmodul 17 verwendet, das bei der Montage des Zugriffskontroll-Befehlsgeräts 1 auf der Rückseite der Fronttafel 2 angekoppelt wird. Vorzugsweise erfolgt die Ankopplung direkt auf das von der Frontseite durch die Öffnung 3 der Fronttafel 2 hindurchgesteckte Betätigungselement 5. Die Ankopplung ist vorzugsweise durch Aufschnappen, aber auch durch Anschrauben oder ähnlichem möglich. Die Verwendung eines solchen Koppelmoduls 17 ist dann sinnvoll, wenn für die Ankopplung an die Maschinensteuerung eine Elektronik 9 mit umfangreichen elektronischen Komponenten benötigt wird. Beide Ausführungsformen sind an der Frontseite des Betätigungselements 5 mit einer Kommunikationsschnittstelle 18 zur Bedienperson versehen, an die ein Handheld zur Programmierung anschließbar ist. Die Ankopplung und Datenübertragung an das Handheld kann mechanisch, optisch, über Funk, usw. erfolgen. Zum Beispiel kann hierzu eine Programmierbuchse oder entsprechendes verwendet werden, die zum Zwecke hoher Integration möglichst direkt mit der Elektronik 9 im Koppelmodul verbunden wird. Dies ist z.B. möglich bei Verwendung eines Doppeldrucktasters, der sowohl Sensor, Signalelemente und die Buchse aufnehmen kann.

Weiter ist in dem Zugriffskontroll-Befehlsgerät 1 optional eine Möglichkeit der Rückmeldung vorgesehen. Sie dient z.B. dazu, dem Personal anzuzeigen, dass das System bereit ist, dass eine Messung stattgefunden hat, dass die Messung zu einer positiven Identifikation geführt hat oder auch nicht, dass der Teach-in-Modus gerade aktiv ist, usw. Mögliche Ausführungsformen solcher Rückmeldeelemente 19 können verschiedenfarbige Lichtsignale, z.B. mittels LED sein, aber auch akustische Signale, z.B. mittels einer Piezokeramik. In einer exklusiven Ausführungsform kann gemäß FIG 5 und 6 ein Kommunikationsdisplay 20 zur Anwendung kommen.

Optional enthält das Zugriffskontroll-Befehlsgerät 1 gemäß FIG 5 einen Aktivierungssensor 21, der eine Aktivierung des Zugriffskontroll-Befehlsgeräts 1 bewirkt, wenn z.B. ein Fingerabdruck erfasst werden soll. Dies kann z.B. durch ein druckempfindliches Modul unter der Sensorfläche bewerkstelligt werden, oder aber mit einem integrierten Tastschalter. Ebenfalls ist dies möglich mit einem neben oder um den Fingertippsensor 8 platzierten Schalt-/Aktivierungsmechanismus oder mit einem optischen Erkennungselement.

## Patentansprüche

1. Zugriffskontroll-Befehlsgerät (1) zum Einbau in eine Öffnung (3) einer Fronttafel (2), die eine Bedienseite und eine dieser gegenüberliegenden Rückseite aufweist, mit folgenden Merkmalen:
a) Mit einem Betätigungselement (5), das zur Abstützung an dem die Öffnung (3) umgebenden Fronttafelbereich einen Kragen (4) aufweist,
b) das Betätigungselement (5) weist einen Sensor (8) zur Erfassung von Personenidentifikationsmerkmalen auf,
c) mit einer gehäusegekapselten Elektronik (9), die elektrisch mit dem Sensor (8) verbunden ist,
d) die Elektronik (9) umfasst eine Verarbeitungseinheit (11), eine Speichereinheit (12), eine Programmeinheit (13) sowie eine Vergleichs- und Auswerteeinheit (14),
e) mit der Elektronik (9) sind elektrische Anschlüsse (15) verbunden, die im montierten Zustand von der Rückseite der Fronttafel (2) zugänglich sind, und an denen nach vorausgegangener Aktivierung des Zugriffskontroll-Befehlsgeräts (1) durch eine als betätigungsberechtigt identifizierte Person elektrisches Auslösesignal ansteht,
f) die Verarbeitungseinheit (11) dient zur Verarbeitung der Daten, die vom Sensor (8) aufgrund der erfassten Personenidentifikationsmerkmale generiert werden,
g) die Speichereinheit (12) dient zur Abspeicherung der verarbeiteten Daten,
h) die Programmeinheit (13) umfasst ein Programm zur Programmierung der Betätigungsberechtigung von Personen, wozu die Personenidentifikationsmerkmale dieser Personen erfasst werden und den Personenidentifikationsmerkmalen entsprechende Daten in der Speichereinheit (12) abgespeichert werden und
i) die Vergleichs- und Auswerteeinheiten (14) dient zum Vergleich und zur Auswertung der mit dem Sensor erfassten Personenidentifikationsmerkmale von Personen, die das Zugriffskontroll-Befehlsgerät (1) betätigen, mit abgespeicherten Personenidentifikationsmerkmalen, woraufhin ausschließlich nach Betätigung durch betätigungsberechtigte Personen ein elektrisches Auslösesignal an den Anschlüssen (15) ansteht.

2. Zugriffskontroll-Befehlsgerät nach Anspruch 1, **dadurch gekennzeichnet, dass** der Sensor (8) zur Erfassung der Personenidentifikationsmerkmale als biometrischer Sensor ausgeführt ist.

3. Zugriffskontroll-Befehlsgerät nach Anspruch 2, **dadurch gekennzeichnet, dass** der biometrische Sensor (8) als Fingertipp-Sensor ausgeführt ist.

4. Zugriffskontroll-Befehlsgerät nach einem der vorangehenden Ansprüche, **dadurch gekennzeichnet, dass** der Sensor (8) als Spracherkennungssensor ausgeführt ist.

5. Zugriffskontroll-Befehlsgerät nach einem der vorangehenden Ansprüche, **dadurch gekennzeichnet, dass** im Betätigungselement (5) eine Kommunikationsschnittstelle (18,20) zur Bedienperson integriert ist.

6. Zugriffskontroll-Befehlsgerät nach einem der vorangehenden Ansprüche, **dadurch gekennzeichnet, dass** die Kommunikationsschnittstelle als Kommunikationsdisplay (20) ausgeführt ist.

7. Zugriffskontroll-Befehlsgerät nach einem der vorangehenden Ansprüche, **dadurch gekennzeichnet, dass** im Betätigungselement (5) eine Programmierbuchse (18) als Kommunikationsschnittstelle integriert ist.

8. Zugriffskontroll-Befehlsgerät nach einem der vorangehenden Ansprüche, **dadurch gekennzeichnet, dass** die Elektronik (9) ein Verschmutzungssensormodul (16) aufweist.

9. Zugriffskontroll-Befehlsgerät nach einem der vorangehenden Ansprüche, **dadurch gekennzeichnet, dass** die Elektronik (9) mit einer Kommunikationsschnittstelle zur Maschinensteuerung versehen ist.

10. Zugriffskontroll-Befehlsgerät nach einem der vorangehenden Ansprüche, **dadurch gekennzeichnet, dass** die Anschlüsse (15) als Kontaktstifte zur abisolierfreien Kontaktierung an eine Busleitung ausgeführt sind.

11. Zugriffskontroll-Befehlsgerät nach einem der vorangehenden Ansprüche, **dadurch gekennzeichnet, dass** das elektrische Auslösesignal personenspezifische Berichtungsmerkmale beinhaltet.
